# EUROPEAN PATENT APPLICATION

(11) **EP 4 258 216 A1**
(43) Date of publication of application: **11.10.2023**
(21) Application number: 22305468.5
(22) Date of filing: 06.04.2022
(51) Int. Cl.: G06T 15/00, G06T 17/00, G06T 19/00, G06T 19/20

(54) **METHOD FOR DISPLAYING A 3D MODEL OF A PATIENT**

(71) Applicant: Avatar Medical, 75015 Paris (FR)
(72) Inventor: EL BEHEIRY, Mohamed, 75015 Paris (FR); PHILIPPON, Nicolas, 75015 Paris (FR)
(74) Representative: Icosa

(57) **Abstract**

The invention relates to computer-implemented method for displaying a 3D model of a patient in a 3D scene, each voxel of the displayed 3D model being associated with a respective pixel of at least one corresponding cross-sectional image of the patient, the 3D scene further including a cursor and at least one display window, the method comprising:
- computing a current position of the cursor in a scene coordinate system of the 3D scene based on a current position of a user point in user coordinate system; and
- for each active display window of the at least one display window, displaying a displayed image based on the cross-sectional image which:
• includes a pixel associated with the voxel that is the closest to the computed current position of the cursor; and
• has a corresponding image cross-section plane that matches a window cross-section plane of the active display window.

## Description

### FIELD OF INVENTION

The invention concerns a computer-implemented method for displaying a 3D model including a three-dimensional representation, in a three-dimensional scene, of at least one portion of a patient.

The invention also concerns a visualization device and a method of receiving a patient for diagnosis, treatment and/or surgery.

The invention relates to the field of medical imaging.

### BACKGROUND OF INVENTION

It is generally known to use cross-sectional images of patient, such as CT scan ("Computed Tomography scan") images, PET ("Positron Emission Tomography") images or MRI ("Magnetic Resonance Imaging") images, to identify lesions (*e.g.,* tumors). Such cross-sectional images may further be used to locate the lesions, as a preliminary step to surgery for their ablation.

However, such approach is not fully satisfactory.

Indeed, in complex cases with multiple lesions, the use of common radiological two-dimensional visualization based on the aforementioned cross-sectional images does not allow, for many surgeons, a good understanding of the actual volumes and the precise localization of lesions. This may lead to excessive tissue removal when performing ablation of said lesions, which is not acceptable from the point of view of the physical integrity of the patient.

A purpose of the invention is to provide a method for visualizing the at least one portion of the patient, that provides better readability to the health provider, thereby improving the ability to precisely locate the lesion(s), and minimizing unnecessary tissue removal.

### SUMMARY

To this end, the present invention is a method of the aforementioned type, wherein each voxel of the displayed 3D model is associated with a respective pixel of at least one corresponding cross-sectional image of the at least one portion of the patient,
each cross-sectional image being associated with a corresponding image cross-section plane,
the three-dimensional scene having a corresponding scene coordinate system attached thereto,
the three-dimensional scene further including a cursor and at least one display window, each display window lying in a respective display plane having a predetermined equation in the scene coordinate system,
each display window being associated with a corresponding window cross-section plane, the method including:
   - computing a current position of the cursor in the scene coordinate system based on a current position of a predetermined user point in a predetermined user coordinate system;
   - for each active display window of the at least one display window, displaying, on the active display window, a displayed image based on the cross-sectional image which:
      - includes a pixel associated with an active voxel which is the voxel having a position that is the closest to the computed current position of the cursor; and
      - has the corresponding image cross-section plane that matches the window cross-section plane of the active display window; and
   - upon receiving an object display instruction, displaying, in the three-dimensional scene, a 3D object at the current position of the cursor.

Indeed, such method allows interactive navigation within the 3D model and provides, in real time, cross-sectional images that are relevant to the voxel that is currently selected. Said displayed cross-sectional images provide guidance to the user as to where the selected voxel of the 3D model actually is located in the cross-sectional images that he is generally used to. Consequently, a full volumetric understanding of the lesion position within the patient and 3D geometries in relation to the surrounding tissues are achievable by the user.

Furthermore, the present invention allows the user to encompass within its field of view, at the same time, both a global three-dimensional representation of the patient anatomy and at least one local standard bidimensional image associated with the desired voxel. Consequently, a surgeon would be able to visualize the standard cross-sectional images with which he is used to work for planning surgery, while being able to refer to the three-dimensional model, which is closer to the real-life scene that he will be confronted to during surgery.

Moreover, the invention provides the user with the opportunity to precisely place a 3D object (such as a landmark or a predetermined volume) in the three-dimensional scene, which allows for a better assessment of the geometry and/or the position of anatomical structures within the patient. This is due to the fact that the invention allows the user to precisely determine, in real time, the position of the region in the vicinity of the cursor.

In addition, the method according to the invention provides a tool allowing efficient collaboration between health professionals specializing in different fields (*i.e.,* surgeon and radiologist). Indeed, on the one hand, the stereoscopic visualization of the 3D model in the three-dimensional scene provides a visual outcome close to the one that a surgeon would have in a surgical theater during operation. On the other hand, the cross-sectional images, interactively and synchronously displayed on the background, are the standard radiographic images (*i.e.,* CT-scan or MRI slices images) which are mainly used by health care personals and surgeons for diagnostic and planning of the treatment. This leads to a better mutual understanding between said health professionals, which is beneficial to the patient undergoing surgery.

Furthermore, the generation of the 3D model does not require tissular boundaries to be predefined, thereby reducing computational complexity and time.

Moreover, when handling lesions with ill-defined boundaries, such is often the case with a breast MRI, the method according to the invention allows boundary regions to be analyzed in an unbiased fashion.

Therefore, the claimed method, when used for surgery planning, can allow more conservation of tissue during the surgical excision of malignant lesions. This increases the odds of implementing oncoplastic surgery with less disfigurement and without compromising patient safety.

According to other advantageous aspects of the invention, the method includes one or more of the following features, taken alone or in any technically possible combination:

the method further comprises, for each displayed 3D object, and for each active display window, displaying a corresponding 2D object on the active display window, each second point of the 2D object corresponding to a first point of the 3D object, at least one second point of the 2D object being located, on the cross-sectional image corresponding to the displayed image which is displayed on the active display window, at a position of the pixel associated with the voxel that is the closest to the first point of the 3D object corresponding to said second point of the 2D object;

the method further comprises, upon receiving an object shifting instruction, including a selected 2D object, an initial position and a final position:
- shifting a position of the selected 2D object in the active display window, based on the initial position and the final position, to obtain a registered 2D object;
- based on the position of the registered 2D object, updating a position of the corresponding 3D object such that, for at least one first point of the 3D object, the closest voxel to said first point is the voxel that is associated with the pixel, on the cross-sectional image corresponding to the displayed image on the active display window, which is the closest to the second point in the 2D object corresponding to said first point;

the method further comprises comprising, for a given pair of successive 3D objects, each pair of successive 3D objects including two 3D objects respectively associated with a reception of two successive display instructions, displaying, in the three-dimensional scene, a segment connecting the two 3D objects of the pair of successive 3D objects, the method preferably including displaying a cumulated length of the segments;

the object display instruction includes an initial position and a final position of the cursor in the scene coordinate system, a shape, a size and/or an orientation of the 3D object depending on the initial position and a final position of the cursor;

the method further includes displaying data representative of a geometry of at least one 3D object;

the method further comprises, upon receiving a transformation instruction, applying a predetermined transform to each voxel of the 3D model located within a predetermined range relative to the current position of the cursor in the three-dimensional scene;

the transform includes:
- decreasing an opacity of each voxel of the 3D model located at a distance greater than a first predetermined radius from the current position of the cursor in the three-dimensional scene; and/or
- modifying a color value of each voxel of the 3D model located at a distance less than a second predetermined radius from the current position of the cursor in the three-dimensional scene, to form a highlighted voxel;

the method further comprises, for each highlighted voxel, for each active display window, and for each displayed image corresponding to a cross-sectional image including a pixel associated with the highlighted voxel, modifying a color of said pixel associated with the highlighted voxel, to form a highlighted pixel;

the method further includes, for each active display window, displaying a line extending between the active voxel and the corresponding pixel of the cross-sectional image displayed on the active display window;

the method further includes:
- determining a current observation vector representative of a direction along which the user views the 3D model in the three-dimensional scene; and
- determining, as the at least one active display window, the display window corresponding to a positive value of a scalar product between:
   - the determined current observation vector; and
   - a normal vector of the respective display plane oriented opposite the 3D model;

each cross-sectional image is associated with an image orientation, each display window being associated with a window orientation, the displayed image corresponding to each cross-sectional image being:
- the cross-sectional image if the image orientation is the same as the window orientation; or
- a mirror image of the cross-sectional image if the image orientation is different from the window orientation.

The invention further relates to a computer program product comprising instructions which, when the program is executed by a computer, cause the computer to perform the method as defined above.

The invention also relates to a non-transitory computer-readable storage medium having computer-executable instructions stored thereupon that, when executed by a computer, cause the computer to carry out the steps of the method as defined above.

The invention also relates to a visualization device including a user interface, a display unit, and a processing unit, wherein:
the user interface is configured to acquire a current position of a predetermined user point in a predetermined user coordinate system;
the display unit is configured to display a 3D model including a three-dimensional representation, in a three-dimensional scene, of at least one portion of a patient, each voxel of the 3D model being associated with a respective pixel of at least one corresponding cross-sectional image of the at least one portion of the patient, each cross-sectional image being associated with a corresponding image cross-section plane, the three-dimensional scene having a corresponding scene coordinate system attached thereto, the three-dimensional scene further including a cursor and at least one display window, each display window lying in a respective display plane having a predetermined equation in the scene coordinate system, each display window being associated with a corresponding window cross-section plane; and
the processing unit is configured to:
   - compute a current position of the cursor in the scene coordinate system based on the current position of the user point in the user coordinate system;
   - for each active display window of the at least one display window, control the display unit to display, on the active display window, a displayed image based on the cross-sectional image which:
      - includes a pixel associated with an active voxel which is the voxel having a position that is the closest to the computed current position of the cursor; and
      - has the corresponding image cross-section plane that matches the window cross-section plane of the active display window; and
   - upon receiving an object display instruction from the user interface, control the display unit to display, in the three-dimensional scene, a 3D object at the current position of the cursor.

According to other advantageous aspects of the invention, the visualization device includes one or more of the following features, taken alone or in any technically possible combination:
the display unit includes at least part of a virtual reality headset, the user interface preferably including a handheld motion tracking sensor;
at least one image cross-section plane one of: a sagittal plane, a coronal plane or a transverse plane.

The invention also relates to a method of receiving a patient for diagnosis and/or treatment and/or surgery, the method comprising:
- generating a 3D model of at least one portion of the patient, each voxel of the 3D model being associated with a respective pixel of at least one corresponding cross-sectional image of the at least one portion of the patient, each cross-sectional image being associated with a corresponding image cross-section plane;
- displaying the 3D model to a user in a three-dimensional scene having a corresponding scene coordinate system attached thereto, the three-dimensional scene further including a cursor and at least one display window, each display window lying in a respective display plane having a predetermined equation in the scene coordinate system, each display window being associated with a corresponding window cross-section plane;
- computing a current position of the cursor in the scene coordinate system based on a current position of a predetermined user point, attached to the user, in a predetermined user coordinate system; and
- for each active display window of the at least one display window, displaying, on the active display window, a displayed image based on the cross-sectional image which:
   - includes a pixel associated with an active voxel which is the voxel having a position that is the closest to the computed current position of the cursor; and
   - has the corresponding image cross-section plane that matches the window cross-section plane of the active display window;
- upon receiving an object display instruction, displaying, in the three-dimensional scene, a 3D object at the current position of the cursor; and
- providing a diagnosis and/or a treatment and/or a surgical strategy recommendation based at least on a result of navigating the 3D model in the three-dimensional scene by the user and/or the 3D object.

According to other advantageous aspects of the invention, the user is a health professional, preferably a surgeon or a radiologist.

### BRIEF DESCRIPTION OF THE DRAWINGS

The invention will be better understood with the attached figures, in which:
**Figure 1** is a schematic representation of a visualization device according to the invention;
**Figure 2** is a schematic representation of a three-dimensional scene displayed by the visualization device of figure 1; and
**Figure 3** is a schematic representation of the three-dimensional scene of figure 2, an observation direction being different from the observation direction of figure 2;
**Figure 4** is similar to figure 2, a 3D object being further displayed in the three-dimensional scene;
**Figure 5** is a schematic representation of a processing unit of the visualization device of figure 1; and
**Figure 6** is a flowchart of a method of receiving a patient according to the invention.

### DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein may represent conceptual views of illustrative circuitry embodying the principles of the disclosure. Similarly, it will be appreciated that any flow charts, flow diagrams, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, a single shared processor, or a plurality of individual processors, some of which may be shared.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces.

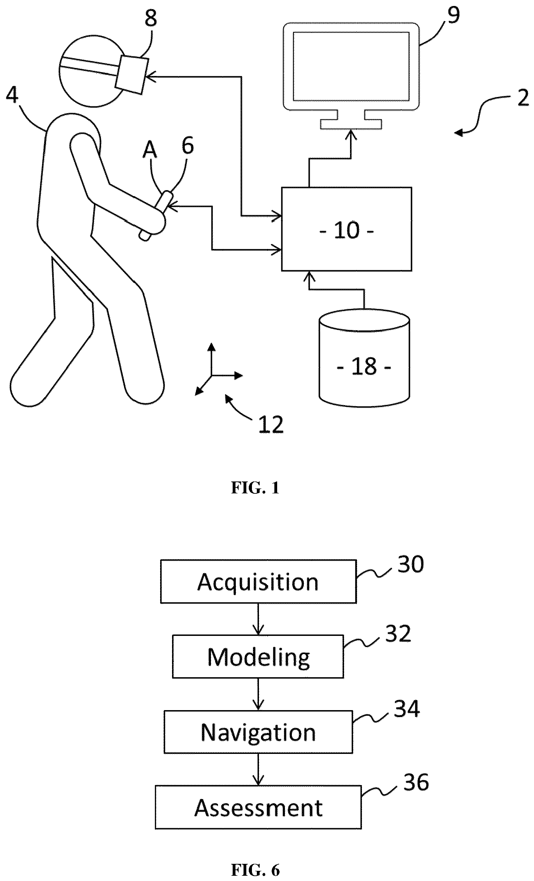

A visualization device 2 according to the invention is shown on figure 1.

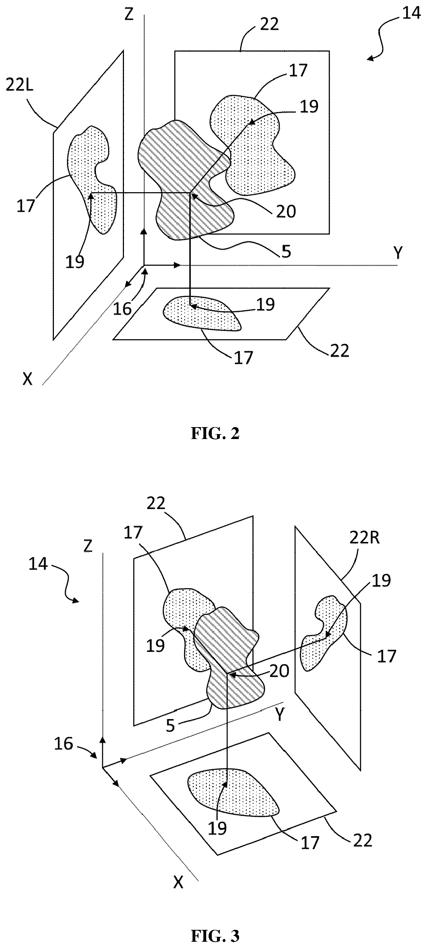

The structure and the operation of the visualization device 2 will be described with reference to figures 1 and 2.

The visualization device 2 is configured to display, to a user 4, such as a health professional (*e.g.,* a surgeon or a radiologist), a 3D model 5 forming a three-dimensional representation of at least one portion of a patient. The visualization device 2 is further configured to provide, to the user, the ability to interact with the 3D model 5.

The aforementioned at least one portion of the patient includes, for instance, at least part of one or several patient's organ(s).

Though the presently described visualization device 2 is versatile and provides several functions that can be carried out alternatively or in any cumulative way, other implementations within the scope of the present disclosure include devices having only parts of the present functionalities.

The visualization device 2 is advantageously an apparatus, or a physical part of an apparatus, designed, configured and/or adapted for performing the mentioned functions and produce the mentioned effects or results. In alternative implementations, the visualization device 2 is embodied as a set of apparatus or physical parts of apparatus, whether grouped in a same machine or in different, possibly remote, machines. The visualization device 2 may for example have functions distributed over a cloud infrastructure and be available to users as a cloud-based service, or have remote functions accessible through an API ("application programming interface").

The visualization device 2 includes a user interface 6 for interacting with the 3D model 5, a display unit 8 for displaying the 3D model 5, and a processing unit 10 for processing data received from the user interface 6 and for controlling the display unit 8.

### User interface 6

The user interface 6 is configured to acquire a current position of a predetermined user point A in a predetermined user coordinate system 12.

The user coordinate system 12 is, for instance, fixed with respect to the user's environment.

The user interface 6 may include a handheld motion tracking sensor, thereby allowing the user 4 to interact with the 3D model 5 (and/or a three-dimensional scene 14 wherein the 3D model 5 is represented) using hand gestures. In this case, the user point A may be a point of the motion tracking sensor.

The user interface 6 may also include other devices, such as a touch screen, a game controller, a mouse and/or a keyboard, thereby further allowing the user 4 to interact with the 3D model 5 (and/or the three-dimensional scene wherein the 3D model 5 is displayed).

The user interface 6 may further include buttons and/or switches configured to allow the user 4 to interact with the 3D model 5 (and/or the three-dimensional scene wherein the 3D model 5 is displayed). Such buttons and/or switches may be included in the handheld motion tracking sensor, or may be included in a separate device of the user interface 6, such as the touch screen, game controller, mouse and/or keyboard mentioned above.

Preferably, the user interface 6 is configured to allow the user 4 to input (for example through said buttons and/or switches) specific instructions, such as an object display instruction, an object shifting instruction or a transformation instruction. Such instructions advantageously allow the user 4 to add and/or manipulate 3D objects in the same three-dimensional scene as the 3D model 5, as will be described below.

The user interface 6 may also be configured to allow the user to manipulate (*e.g*., to rotate and/or to zoom in on or out of) the 3D model 5, and/or to change a direction along which the user 4 views the 3D model 5 displayed by the display unit 8.

The user interface 6 may also be configured to allow the user to manipulate (*e.g*., move and/or rotate) 2D objects displayed in the three-dimensional scene, and more specifically in display windows (described below) of the three-dimensional scene.

Alternatively, or in addition, the user interface 6 includes virtual buttons displayed in the three-dimensional scene to allow the user 4 to interact with the 3D model 5, the three-dimensional scene, the 3D object(s) and/or the 2D object(s).

### Display unit 8

As mentioned previously, the display unit 8 is configured to display the 3D model 5.

Advantageously, the display unit 8 is at least part of a virtual reality headset, thereby allowing stereoscopic visualization of the 3D model 5. This is particularly advantageous in the field of medicine, since virtual reality visualization of the 3D model 5 allows the user 4 to have a good understanding of actual volumes and precise localization of potential lesions. For instance, in the case of oncology, this increases the odds of implementing oncoplastic surgery with less disfigurement and without compromising patient safety.

The virtual reality headset may include one or more sensor(s) such as accelerometer(s) and/or gyroscope(s). In this case, each sensor is part of the user interface 6, and is configured to output a signal that is representative of a direction along which the user 4 views the 3D model 5 in a three-dimensional scene 14 described below.

Alternatively, or in addition, the display unit 8 includes a screen 9, as shown on figure 1.

More precisely, the 3D model 5 forms a three-dimensional representation, in the aforementioned three-dimensional scene 14, of the at least one portion of the patient. This three-dimensional scene (hereinafter, "3D scene") has a scene coordinate system 16 attached thereto.

Moreover, each voxel of the 3D model 5 is associated with a respective pixel of at least one corresponding cross-sectional image of the at least one portion of the patient.

Each cross-sectional image is associated with a corresponding image cross-section plane, and, preferably, shows a slice 17 of the aforementioned portion, in a corresponding image cross-section plane.

Such image cross-section plane may be one of a sagittal plane, a coronal plane or a transverse plane, and more precisely a sagittal plane, a coronal plane or a transverse plane of the patient.

As an example, each cross-sectional image has been previously acquired using magnetic resonance imaging (MRI), such as T1-weighted contrast-enhanced MRI, CT scan imaging, or PET imaging, or any acquisition technique that may be used for preoperative preparation and planning.

Furthermore, each cross-sectional image is preferably stored in a database 18, such as Picture Archiving and Communication System of a medical facility, for instance a hospital.

Preferably, each cross-sectional image is stored in the database 18 in standard DICOM ("Digital Imaging and Communications in Medicine") file format. This is advantageous, since DICOM files are associated with a scale representative of the imaged anatomical structures. Consequently, when a scale of the 3D scene 14 is matched with the scale of the DICOM files, precise measurements of geometrical features related to the 3D model 5 (distances, surfaces and/or volumes) are available.

Advantageously, each cross-sectional image is further associated with an image orientation.

By "image orientation of a cross-sectional image", it is meant, in the context of the present invention, a direction along which the patient is observed on said cross-sectional image.

For instance, in the case of cross-sections along the sagittal plane of the patient, the image orientation may be "left side view" or "right side view".

As another example, in the case of cross-sections along the coronal plane of the patient, the image orientation may be "front view" or "rear view".

As a further example, in the case of cross-sections along the transverse plane of the patient, the image orientation may be "top view" or "bottom view".

Furthermore, the 3D scene 14 displayed by the display unit 8 further includes a cursor 20, and at least one display window 22. For instance, the 3D scene 14 includes six display windows 22.

Each display window 22 lies in a respective display plane, which has a predetermined equation in the scene coordinate system 16. For instance, at least two display planes are orthogonal, thereby mimicking the orthogonality between cross-section planes that are usually used in medical imaging (sagittal, coronal and transverse plane), hence improving readability of the 3D scene 14.

More precisely, each display plane is preferably orthogonal to four other display planes, so that the six display windows 22 each lie on a respective face of parallelepiped.

Furthermore, each display window 22 is associated with a corresponding window cross-section plane. Such window cross-section plane may be one of a sagittal plane, a coronal plane or a transverse plane.

Moreover, at any given time, there may be zero, one or more active display window(s) 22 among the total number of display windows 22, and preferably three active display windows 22.

Each active display window is defined as a display window that displays an image, hereinafter referred to as "displayed image". Conversely, a display window 22 that, at a given time, is not an active display window may not display an image, and therefore may not be visible in the 3D scene 14.

Determination of said active display windows will be described below.

Advantageously, each display window 22 is associated with a respective window orientation. Furthermore, two display windows 22 that lie in parallel display planes are associated with opposite window orientations, such as: "left side view" and "right side view", "front view" and "rear view", or "top view" and "bottom view". The advantages of such feature will be discussed below.

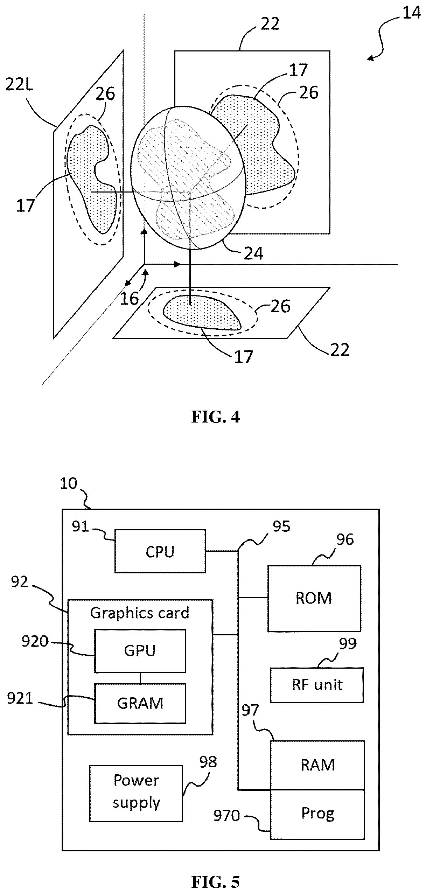

The display unit 8 is further configured to display at least one 3D object 24 in the 3D scene 14, as shown on figure 4.

Each 3D object may include any number of points. For instance, the 3D object is a landmark including at least one point. Alternatively, the 3D object is a segment including at least two points, each corresponding to one end of the segment. As another example, the 3D object is a surface including at least three non-coplanar points. Alternatively, the 3D object has a tridimensional shape and includes at least four non-coplanar points.

The 3D object may also be a 2D or 3D segmentation mask (such as a mesh) for identifying and/or highlighting an anatomical structure of predetermined nature. In this case, the visualization device 2 may be provided with a library of segmentation masks stored thereon. The 3D object may also represent a medical device. In the latter case, the 3D object may be generated from a 3D object file (*e.g*., provided in .stl or .obj file format) representing said physical medical device.

### Processing unit 10

According to the present invention, the expression "processing unit" should not be construed to be restricted to hardware capable of executing software, and refers in a general way to a processing device, which can for example include a microprocessor, an integrated circuit, or a programmable logic device (PLD). The processing unit may also encompass one or more Graphics Processing Units (GPU) or Tensor Processing Units (TSU), whether exploited for computer graphics and image processing or other functions. Additionally, the instructions and/or data enabling to perform associated and/or resulting functionalities may be stored on any processor-readable medium such as, e.g., an integrated circuit, a hard disk, a CD (Compact Disc), an optical disc such as a DVD (Digital Versatile Disc), a RAM (Random-Access Memory) or a ROM (Read-Only Memory). Instructions may be notably stored in hardware, software, firmware or in any combination thereof.

The processing unit 10 is connected to each of the user interface 6 and the display unit 8.

The processing unit 10 corresponds, for example, to a workstation, a laptop, a tablet, a smartphone, programmable logical device (e.g., FPGA) for on-board calculation or a head-mounted display (HMD) such as a virtual reality headset.

As shown on figure 4, the processing unit 10 may comprise the following elements, connected to each other by a bus 95 of addresses and data that also transports a clock signal:
- a microprocessor 91 (or CPU);
- a graphics card 92 comprising several Graphical Processing Units (or GPUs) 920 and a Graphical Random Access Memory (GRAM) 921; the GPUs are quite suited to image processing due to their highly parallel structure;
- a non-volatile memory of ROM type 96;
- a RAM 97;
- a power supply 98; and
- a radiofrequency unit 99.

### Alternatively, the power supply 98 is external to the processing unit 10.

The user interface 6 is, for instance, connected to at least part of the aforementioned modules, for instance through the bus 95.

The display unit 8 is connected to the graphics card 92, for instance through a suitable interface. For instance, a cable can be used for tethered transmissions, or the RF unit 99 can be used for wireless transmissions.

Each of memories 97 and 921 includes registers, which can designate in each of said memories, a memory zone of low capacity (some binary data) as well as a memory zone of large capacity (enabling a whole program to be stored or all or part of the data representative of data calculated or to be displayed). Also, the registers represented for the RAM 97 and the GRAM 921 can be arranged and constituted in any manner. Each of them does not necessarily correspond to adjacent memory locations and can be distributed otherwise (which covers notably the situation in which one register includes several smaller registers).

When switched-on, the microprocessor 91 loads and executes the instructions of the program 970 contained in the RAM 97 to allow operation of the visualization device 2 in the fashion described in the present disclosure.

As will be understood by a skilled person, the presence of the graphics card 92 is not mandatory, and can be replaced with entire CPU processing and/or other implementations.

The processing unit 10 is configured to compute a current position of the cursor 20 in the scene coordinate system 16 based on the current position of the user point A in the user coordinate system 12.

Moreover, for each active display window 22, the processing unit 10 is configured to control the display unit 8 to display, on said active display window, the corresponding displayed image. Such displayed image is based on the cross-sectional image which:
- includes a pixel 19 associated with a current active voxel; and
- has the corresponding first cross-section plane that matches the window cross-section plane of the active display window.

Such active voxel is defined as the voxel that has a position, in the 3D scene 14, that is the closest to the computed current position of the cursor 20.

Moreover, in the context of the present invention, the expression "the first cross-section plane matches the window cross-section plane of the active display window" means that the first cross-section plane and the window cross-section plane are the same.

Furthermore, the processing unit 10 is configured to detect an object display instruction input by the user 4 through the user interface 6. Upon receiving the object display instruction, the processing unit 10 is configured to control the display unit 8 to display, in the 3D scene 14, a 3D object at the current position of the cursor 20.

Advantageously, the object display instruction further includes an initial position and a final position of the cursor 20 in the scene coordinate system 16. In this case, the processing unit 10 is configured to determine a shape, a size and/or an orientation of the 3D object 24 depending on the initial position and the final position of the cursor 20.

The initial and final positions in the scene coordinate system 16 may be determined, by the processing unit 10, based on a motion of the user point A in the user coordinate system 12.

This is advantageous in the case where, for instance, the 3D object is one of several 3D segmentation masks stored in a library, each mask corresponding to an organ or part of an organ, or in the case where the 3D object represents a medical device that should be implanted in the patient. In this case, the user 4 is able to adjust features of the mask (such as shape, size and/or orientation) or the model of the medical device through the user interface 6.

More precisely, the processing unit 10 is configured to control the display unit 8 to display the 3D object so that a position of a predetermined point of the 3D object coincides with the current position of the cursor 20. Such predetermined point may be a center of gravity of the 3D object, an end of the 3D object, a point on an outer surface of the 3D object, and so on.

Optionally, the processing unit 10 is further configured to determine, for each displayed 3D object 24, at least one corresponding 2D object 26. In this case, the processing unit 10 is configured to control the display unit 8 so as to display each determined 2D object 26 on a corresponding active display window.

Preferably, for a given 3D object 24, and for a given active display window, the 2D object corresponds to a slice of the 3D object in the corresponding image cross-section plane. In other words, for a given 3D object 24, and for a given active display window 22, each 2D object 26 corresponds to an intersection of the 3D object 24 with the plane defined by the voxels that are associated with the pixels of the cross-sectional image on which is based the displayed image currently displayed on said active display window 22.

Preferably, each second point of the 2D object corresponds to a first point of the 3D object. In this case, for each displayed 3D object 24, and for each active display window 22, the processing unit 10 is configured to control the display unit 8 so that at least one second point of the 2D object 26 is located, on the cross-sectional image corresponding to the displayed image currently displayed on said active display window, at the position of the pixel which is associated with the voxel that is the closest to the first point of the 3D object 24 corresponding to said second point of the 2D object 26.

Advantageously, the processing unit 10 is further configured to control the display unit 8 to display, for each active display window 20, a line extending between the active voxel and the corresponding pixel 19 of the cross-sectional image displayed on said active display window 22. Consequently, the user 4 can easily locate the active voxel in the 3D model 5 using the location of each corresponding pixel 19 in the images currently displayed on the display windows.

Preferably, the processing unit 10 is configured to detect an object shifting instruction input by the user 4 through the user interface 6. Such object shifting instruction includes a selected 2D object, an initial position and a final position. The initial position and the final position may, for example, be an initial and a final position of the user point A in the user coordinate system 12, or an initial and a final position of the cursor 20 in the scene coordinate system 16.

Upon receiving the object shifting instruction, the processing unit 10 is configured to shift a position of the selected 2D object in the corresponding active display window, based on the initial position and the final position, to obtain a registered 2D object.

Furthermore, the processing unit 10 is configured to update a position of the 3D object 24, in the 3D scene 14, based on the position of the registered 2D object 26. More precisely, the processing unit 10 is configured to update the position of the 3D object 24 such that, for at least one first point of the 3D object 24, the closest voxel to said first point is the voxel that is associated with the pixel, on the cross-sectional image corresponding to the displayed image currently displayed on the active display window, which is the closest to the second point in the 2D object corresponding to said first point.

Consequently, by moving each 2D object on the corresponding active display window, the user 4 is able to interact with and move the corresponding 3D object 24. This is particularly advantageous if the active display windows are also displayed on the screen 9, thus providing the user 4 with a work environment that is more suitable for such interaction by displaying 2D images on a 2D interface. Moreover, such feature allows the user 4 to use the stereoscopic visualization to navigate the 3D model 5 and quickly place 3D objects in the 3D scene 14, and to adjust them on a 2D interface that he is used to.

Preferably, the processing unit 10 is also configured to detect a transformation instruction input by the user 4 through the user interface 6.

In this case, the processing unit 10 is further configured, upon receiving the transformation instruction, to apply a predetermined transform to at least part of the voxels of the 3D model. More precisely, the processing unit 10 is further configured to apply the predetermined transform to each voxel located within a predetermined range relative to the current position of the cursor 20 in the 3D scene 14.

For instance, the processing unit 10 is configured to control the display unit 8 so as to decrease an opacity of each voxel of the 3D model 5 located at a distance greater than a first predetermined radius from the current position of the cursor 20 in the 3D scene 14. This is advantageous, since such feature allows the user 4 to efficiently navigate the 3D model 5 and to focus on a region of interest located in the vicinity of the cursor 20, by reducing visual interference that may be caused by other voxels located in front and/or behind said region of interest.

As another example, the processing unit 10 is configured to control the display unit 8 so as to modify a color value of each voxel of the 3D model 5 located at a distance less than a second predetermined radius from the current position of the cursor 20 in the 3D scene 14. As a result, each voxel with a modified color value forms a highlighted voxel.

In the latter case, the transformation instruction is preferably part of the aforementioned object display instruction.

In this case, each highlighted voxel may define a 3D object forming a landmark and located at the same position as said highlighted voxel.

Alternatively, each cluster of highlighted voxels may define a 3D object forming a surface or a volume. For instance, the 3D object is a mesh connecting the highlighted voxels of the cluster. As another example, the 3D object is a volume including points having a position which interpolates the positions of at least part of the highlighted voxels of the cluster.

For instance, a cluster of highlighted voxels is defined as the highlighted voxels that are within a predetermined distance from one another. As another example, a cluster of highlighted voxels is defined as the voxels that have been highlighted between two predetermined events, such as a pression and a following depression of a button of the user interface 6.

Preferably, the processing unit 10 is configured to control the display unit 8 so as to, for each highlighted voxel, for each active display window, and for each displayed image corresponding to a cross-sectional image including a pixel associated with the highlighted voxel, modify a color of said pixel associated with the highlighted voxel, to form a highlighted pixel. Consequently, the user 4 is able to view the result of the transform that is being applied, and adjust the position of the cursor 20 accordingly.

Preferably, the processing unit 10 is configured to control the display unit 8 so as to display, in the 3D scene 14, for at least two successive 3D objects, a segment connecting said two successive 3D objects. This especially applies in the case where each 3D object is a 3D landmark, *i.e.,* a point.

In the context of the present invention, by "two successive 3D objects", it is meant two 3D objects that are respectively associated with a reception of two successive display instructions. In other words, two successive 3D objects have been successively added by the user 4 in the displayed 3D scene 14.

Such displayed segments are advantageous, as they allow the user 4 to better apprehend geometrical relationships (such as relative positions and/or alignment) between anatomical structures shown on the 3D model.

Advantageously, the processing unit 10 is further configured to compute data representative of a geometry of at least one 3D object. In this case, the processing unit 10 is further configured to control the display unit 8 to display the computed data.

For instance, said data corresponds to a cumulated distance, in the 3D scene, between at least two successive 3D objects, such as at least two successive 3D landmarks. In other words, said data is equal to the cumulated length of the segments connecting the at least two successive 3D objects.

According to other examples, the computed data include a volume of a 3D object (sphere, ellipsoid, cube, and so on) that the user has drawn in the 3D scene 14. Alternatively, or in addition, the computed data include a cumulated volume of highlighted voxels, defined as a result of multiplying a voxel volume by a total number of highlighted voxels.

Advantageously, to determine each active display window 22, the processing unit 10 is configured to first determine a current observation vector. Such observation vector is representative of the direction along which the user 4 views the 3D model 5 in the 3D scene 14, and may result from an interaction of the user 4 with the 3D scene 14 through the user interface 6.

Furthermore, the processing unit 10 is configured to determine that a display window is an active display window if said display window leads to a positive value of a scalar product between:
- on the one hand, the determined current observation vector; and
- on the other hand, a normal vector of the respective display plane, said normal vector being oriented opposite the 3D model 5.

Preferably, the processing unit 10 is configured to control the display unit 8 so that the displayed image corresponding to each cross-sectional image is:
- the cross-sectional image itself, if the image orientation is the same as the window orientation; or
- a mirror image of the cross-sectional image, if the image orientation is different from the window orientation.

In the latter case, the mirror image of a given cross-sectional image of size (N;M) is an image where each pixel (x;y) has the same value as the pixel (N+1-x;y) of said original cross-sectional image, N and M being integers greater than 0. Consequently, N is the number of pixels of the cross-sectional image along its width. As a result, the displayed images that appear on the active display windows appear to the user 4 as slices of the 3D model observed from the point of view of the user (*i.e.,* "from the left", "from the right", "from the front", "from the back", "from above" or "from below"). This increases understandability.

Consequently, for a given voxel, two display windows lying in parallel display planes may display images that are mirror images of one another, as can be understood from figures 2 and 3, wherein the active voxel is the same. In this case, the images shown on active displays 22L (figure 2) and 22R (figure 3) are mirror images of one another.

More precisely, the example of figure 3 corresponds to the same 3D model 5 in the same 3D scene 14 as figure 2. The scene in figure 3 is derived from the scene of figure 2 by a rotation counter-clockwise about a vertical axis Z of approximately 45°.

### Operation

Operation of the visualization device 2 will now be described with reference to figure 5.

During an optional acquisition step 30, the patient is received at a medical facility, and cross-sectional images of the patient are acquired. Each cross-sectional image is associated with a corresponding image cross-section plane.

Then, during a modeling step 32, a 3D model 5 of at least one portion of the patient is generated, preferably based on the acquired cross-sectional images. Each voxel of the 3D model is associated with a respective pixel of at least one corresponding acquired cross-sectional image.

Then, during a navigation step 34, the visualization device 2 is used to display the 3D model, in a 3D scene 14, to a user 4. As previously mentioned, the 3D scene 14 has a corresponding scene coordinate system 16 attached thereto. The 3D scene 14 further includes the cursor 20 and the aforementioned at least one display window 22.

The user 4 is preferably a health professional, such as a surgeon or a radiologist.

During the navigation step 34, the processing unit 10 computes a current position of the cursor 22 in the scene coordinate system 16, based on a current position of a predetermined user point A in a predetermined user coordinate system 12. The current position of the user point A is obtained through the user interface 6.

Preferably, during the navigation step 34, the processing unit 10 determines a current observation vector representative of a direction along which the user views the 3D model in the three-dimensional scene 14. Consequently, the processing unit 10 selects each active display window 22 based on the determined current observation vector.

Moreover, during the navigation step 34, the processing unit 10 controls the display unit 8 to display, on each active display window 22, a displayed image based on the cross-sectional image which:
- includes a pixel associated with the current active voxel; and
- has the corresponding image cross-section plane that matches the window cross-section plane of the active display window.

As mentioned previously, the current active voxel is the voxel which has a position that is the closest to the computed current position of the cursor 20.

Furthermore, during the navigation step 34, upon receiving an object display instruction, the processing unit 10 controls the display unit 8 to display, in the three-dimensional scene, a 3D object at the current position of the cursor. The shape, size and orientation of the 3D object may be selected by the user through the user interface.

Then, during an assessment step 36, based at least on a result of navigating the 3D model in the 3D scene 14 and/or the 3D object by the user 4, a diagnosis and/or a treatment recommendation and/or a surgical strategy recommendation is provided. Such diagnosis and/or treatment recommendation and/or a surgical strategy recommendation may be determined by the user 4 himself.

## Claims

1. A computer-implemented method for displaying a 3D model (5) including a three-dimensional representation, in a three-dimensional scene (14), of at least one portion of a patient,
each voxel of the displayed 3D model (5) being associated with a respective pixel of at least one corresponding cross-sectional image of the at least one portion of the patient,
each cross-sectional image being associated with a corresponding image cross-section plane,
the three-dimensional scene (14) having a corresponding scene coordinate system (16) attached thereto,
the three-dimensional scene (14) further including a cursor (20) and at least one display window (22),
each display window (22) lying in a respective display plane having a predetermined equation in the scene coordinate system (16),
each display window (22) being associated with a corresponding window cross-section plane,
the method including:
- computing a current position of the cursor (20) in the scene coordinate system (16) based on a current position of a predetermined user point (A) in a predetermined user coordinate system;
- for each active display window (22) of the at least one display window (22), displaying, on the active display window (22), a displayed image based on the cross-sectional image which:
• includes a pixel (19) associated with an active voxel which is the voxel having a position that is the closest to the computed current position of the cursor (20); and
• has the corresponding image cross-section plane that matches the window cross-section plane of the active display window (22); and
- upon receiving an object display instruction, displaying, in the three-dimensional scene (14), a 3D object (24) at the current position of the cursor (20).

2. The method according to claim **1,** further comprising,
for each displayed 3D object (24), and
for each active display window (22),
displaying a corresponding 2D object (26) on the active display window (22), each second point of the 2D object (26) corresponding to a first point of the 3D object (24),
at least one second point of the 2D object (26) being located, on the cross-sectional image corresponding to the displayed image which is displayed on the active display window (22), at a position of the pixel associated with the voxel that is the closest to the first point of the 3D object (24) corresponding to said second point of the 2D object (26).

3. The method according to claim **2,** further comprising, upon receiving an object shifting instruction, including a selected 2D object (26), an initial position and a final position:
- shifting a position of the selected 2D object (26) in the active display window (22), based on the initial position and the final position, to obtain a registered 2D object (26);
- based on the position of the registered 2D object (26), updating a position of the corresponding 3D object (24) such that, for at least one first point of the 3D object (24), the closest voxel to said first point is the voxel that is associated with the pixel, on the cross-sectional image corresponding to the displayed image on the active display window (22), which is the closest to the second point in the 2D object (26) corresponding to said first point.

4. The method according to any one of claims **1** to **3,** further comprising, for a given pair of successive 3D objects (24), each pair of successive 3D objects (24) including two 3D objects (24) respectively associated with a reception of two successive display instructions, displaying, in the three-dimensional scene (14), a segment connecting the two 3D objects (24) of the pair of successive 3D objects (24), the method preferably including displaying a cumulated length of the segments.

5. The method according to any one of claims **1** to **4,** wherein the object display instruction includes an initial position and a final position of the cursor (20) in the scene coordinate system (16), a shape, a size and/or an orientation of the 3D object (24) depending on the initial position and a final position of the cursor (20).

6. The method according to any one of claims **1** to **5,** further including displaying data representative of a geometry of at least one 3D object (24).

7. The method according to any one of claims **1** to **6,** further comprising, upon receiving a transformation instruction, applying a predetermined transform to each voxel of the 3D model (5) located within a predetermined range relative to the current position of the cursor (20) in the three-dimensional scene (14).

8. The method according to claim **7,** wherein the transform includes:
- decreasing an opacity of each voxel of the 3D model (5) located at a distance greater than a first predetermined radius from the current position of the cursor (20) in the three-dimensional scene (14); and/or
- modifying a color value of each voxel of the 3D model (5) located at a distance less than a second predetermined radius from the current position of the cursor (20) in the three-dimensional scene (14), to form a highlighted voxel.

9. The method according to claim **8,** further comprising,
for each highlighted voxel,
for each active display window (22), and
for each displayed image corresponding to a cross-sectional image including a pixel associated with the highlighted voxel,
modifying a color of said pixel associated with the highlighted voxel, to form a highlighted pixel.

10. The method according to any one of claims **1** to **9,** further including, for each active display window (22), displaying a line extending between the active voxel and the corresponding pixel (19) of the cross-sectional image displayed on the active display window (22).

11. The method according to any one of claims **1** to **10,** further including:
- determining a current observation vector representative of a direction along which the user views the 3D model (5) in the three-dimensional scene (14); and
- determining, as the at least one active display window (22), the display window (22) corresponding to a positive value of a scalar product between:
• the determined current observation vector; and
• a normal vector of the respective display plane oriented opposite the 3D model (5).

12. The method according to any one of claims **1** to **11,** wherein each cross-sectional image is associated with an image orientation, each display window (22) being associated with a window orientation, the displayed image corresponding to each cross-sectional image being:
- the cross-sectional image if the image orientation is the same as the window orientation; or
- a mirror image of the cross-sectional image if the image orientation is different from the window orientation.

13. A computer program product comprising instructions which, when the program is executed by a computer, cause the computer to perform the method according to any one of claims **1** to **12.**

14. A visualization device including a user interface, a display unit, and a processing unit, wherein:
the user interface is configured to acquire a current position of a predetermined user point in a predetermined user coordinate system (12);
the display unit is configured to display a 3D model (5) including a three-dimensional representation, in a three-dimensional scene (14), of at least one portion of a patient, each voxel of the 3D model (5) being associated with a respective pixel of at least one corresponding cross-sectional image of the at least one portion of the patient, each cross-sectional image being associated with a corresponding image cross-section plane, the three-dimensional scene (14) having a corresponding scene coordinate system (16) attached thereto, the three-dimensional scene (14) further including a cursor (20) and at least one display window (22), each display window (22) lying in a respective display plane having a predetermined equation in the scene coordinate system (16), each display window (22) being associated with a corresponding window cross-section plane; and
the processing unit is configured to:
- compute a current position of the cursor (20) in the scene coordinate system (16) based on the current position of the user point in the user coordinate system (12);
- for each active display window (22) of the at least one display window (22), control the display unit to display, on the active display window (22), a displayed image based on the cross-sectional image which:
• includes a pixel (19) associated with an active voxel which is the voxel having a position that is the closest to the computed current position of the cursor (20); and
• has the corresponding image cross-section plane that matches the window cross-section plane of the active display window (22); and
- upon receiving an object display instruction from the user interface, control the display unit to display, in the three-dimensional scene (14), a 3D object (24) at the current position of the cursor (20).

15. The visualization device of claim **14,** wherein the display unit includes at least part of a virtual reality headset, the user interface preferably including a handheld motion tracking sensor.
